# EUROPEAN PATENT SPECIFICATION

(11) **EP 2 143 596 B1**
(45) Date of publication and mention of the grant of the patent: **30.03.2011**
(21) Application number: 09008839.4
(22) Date of filing: 07.07.2009
(51) Int. Cl.: B60R 22/195, B60R 22/20

(54) **Safety device for an automobile vehicle seat**
Sicherheitsvorrichtung eines Kraftfahrzeugsitzes
Dispositif de sécurité d'un siège de vèhicule

(30) Priority: 07.07.2008 FR 0854611
(43) Date of publication of application: 13.01.2010
(73) Proprietor: Autoliv Development AB, 447 83 Vårgårda (SE)
(72) Inventor: Gros, Christophe, 76220 Neuf-Marché (FR); Bronner, Jérôme, 76220 Gournay-en-Bray (FR)
(74) Representative: Müller Verweyen

(56) References cited:
- EP-A- 1 593 559
- WO-A-2004/041602
- WO-A-2007/139599
- FR-A- 2 695 893
- US-A1- 2002 089 164
- US-A1- 2005 209 755
- US-A1- 2005 269 148

## Description

The present invention relates to a safety device for an automobile vehicle seat.

In certain vehicle seat positions and in dependence on the manner in which the occupant of a seat positions himself thereon it may be the case that the safety belt protection systems do not entirely fulfil their assigned functions.

In fact when, for example, the occupant does not assume a "normal" sitting position, and in spite of the presence of the belt retractor system, the body of this occupant tends to slide towards the front underneath the lap part of the belt in an impact situation so that the retractor system does not entirely fulfil its safety functions.

A seat is known from the document US 6 938 926 which is provided with a safety belt retractor system which acts on the two lower anchoring elements disposed on the two sides of the sitting part of the seat.

This system extends transversely with respect to the seat and ensures that traction is exerted on the cables which connect the anchoring elements to the floor of the vehicle.

In one variation this system is fixed to the frame of the sitting part of the seat and forms therewith an assembly which can move longitudinally along rails fixedly attached to the floor of the vehicle. Unfortunately, a device of this type cannot solve the problem described above.

EP 1 593 559 A1 discloses a safety device according to the preamble of claim 1.

US 2005 209755 A1, WO 2004 041602 A and WO 2007 139599 A disclose related safety systems.

US 2002 089164 A1, US 2005 269148 A1 and FR 2 695 893 A disclose safety systems illustrating the technological background.

The aim of the present invention is therefore to propose a safety device for an automobile seat, which makes it possible to limit the risk of the body of the occupant sliding below the lap part of the belt and this belt being unable to hold him satisfactorily.

The present invention solves this object by providing a safety device with the features of claim 1.

According to other advantageous and non-limiting features of the invention:
- said lower anchoring element consists of the buckle of said belt;
- said lower anchoring element consists of a non-removable fixing piece for one end of the belt;

- said traction means consisting of a safety belt retractor system which exerts traction on a cable fixedly attached to said anchoring element, via a turning point means;
- said displacement means comprising on the one hand said traction means and on the other hand the turning point means which is mounted so as to slide longitudinally relative to said seat so that the sliding of said means causes the displacement of said anchoring means;
- said turning point means consists of a sheave which is guided so as to slide along a longitudinal aperture;
- it comprises a retractable stop able to immobilise said turning point means or to release it, this stop remaining in the immobilising position as long as said traction means are not activated;
- said stop consists of a cylinder rod or of a rotating piston;
- said safety belt retractor system comprises a tube in which said cable is partially housed, this tube extending transversely below the sitting part of the seat and enclosing means for simultaneously applying traction to the two anchoring elements provided on the two sides of the sitting part of the seat;
- said tube is provided with means able to cause them to slide forwards independently of said seat.

Other features and advantages of the present invention will become clear from reading the detailed description which follows. It will be made with reference to the attached drawings in which:
- Figure 1 is a schematic side view of an automobile vehicle seat on which a person is seated, this figure being essentially intended to show all the safety means which the seat can include;
- Figures 2 to 4 are simplified front views of a part of the means constituting the device of the present invention, these means being respectively shown in three successive working positions;
- Figures 5 to 7 are views analogous to the preceding three figures, it being stated that they show means for immobilising a sliding sheave;
- Figures 8 and 9 are once again views analogous to the preceding three figures, showing a preferred embodiment in which a gas discharge valve is provided;
- Figure 10 is a simplified perspective view of another embodiment in which a safety belt retractor system is disposed transversely with respect to the sitting part of the seat;
- finally Figures 11 and 12 are longitudinal cross-sectional views of the device of Figure 10 in two extreme working positions.

Throughout the present application the terms "front/forwards", "rear", "top" and "bottom/downwards" will be taken into consideration in reference to the seat concerned. Thus a displacement towards the front is considered as meaning in the direction of the front of the seat no matter what its relative position with respect to the vehicle.

Moreover, the terms "longitudinal" and "transverse" are taken in reference to the largest dimension of the vehicle.

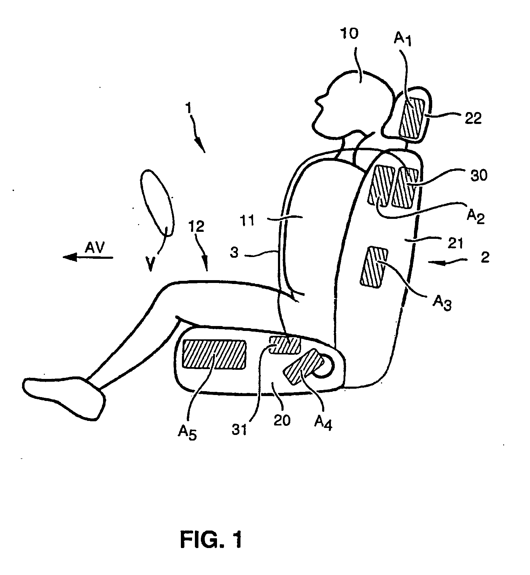

Figure 1 shows an automobile vehicle driver 1 who is seated on a seat referenced 2. This seat has a sitting part 20 as well as a backrest 21.

This seat is provided with a safety belt 3 with three anchoring elements, i.e. an upper anchoring element 30 which is either disposed in the vicinity of an edge of the backrest (e.g. on a lateral upright of the chassis of the vehicle) or disposed in the proximity of the upper end of this backrest (in the case where the safety belt is borne by the backrest itself).

This belt is also provided with two lower anchoring elements provided on the two sides of the sitting part 20 of the seat.

In Figure 1 only one of these elements 31 is shown. It is e.g. an unlockable anchoring element which consists of a safety belt buckle 3. The other lower element, not visible, disposed on the other side of the sitting part is for its part arranged so that it cannot be unlocked, which means that it is not possible for the occupant to detach the attached end of the belt without using appropriate tools.

This figure shows additional safety devices with which the seat 2 may be equipped. These are, in particular, inflatable safety cushions, otherwise known as airbags, referenced A₁ to A₄. These airbags are respectively intended to protect the head 10 of the passenger (A₁ and A₂), his thorax 11 (A₃) and his pelvis (A₄). The means A₅ is a so-called anti-submarining device which aims to prevent the passenger sliding below the lap part of the belt.

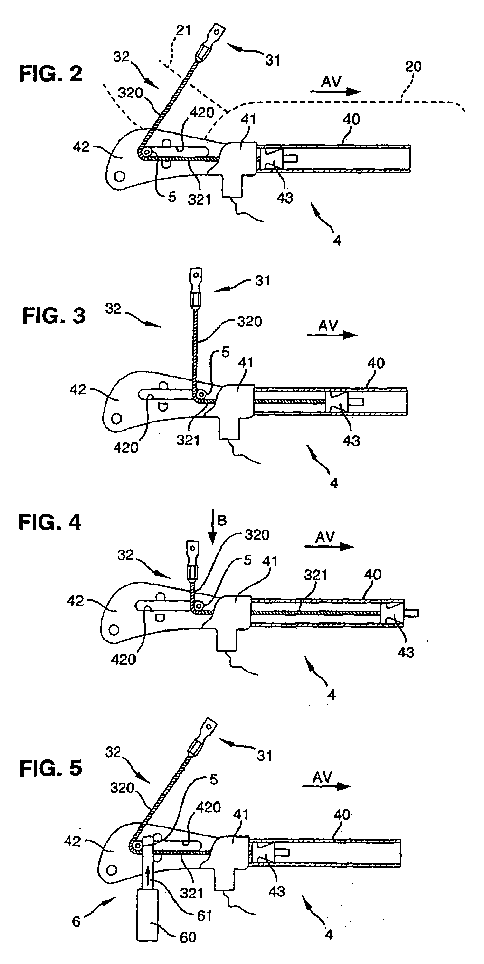

Figures 2 to 4 show traction means which make it possible to impart a downwards displacement of at least one of the two lower anchoring means described above, which are activated only on the basis of information emitted by impact detection means (not shown) with which the vehicle is equipped.

In this case this is a safety belt retractor system 4 which has a structure which is generally known per se.

It is supported by the floor of the vehicle or is fixedly attached to the seat mounted on longitudinally sliding rails.

This system includes a generally vertical plate 42 which continues longitudinally towards the front via an essentially cylindrical tube 40. The entrance to this cylindrical tube is referenced 41 and includes in its internal space a pyrotechnic gas micro-generator of a known structure.

As shown in particular by Figure 2 this system is disposed on one side of the sitting part 20 of a seat so that the plate 42 is located substantially in the region where the backrest 21 is articulated with respect to the sitting part 20.

The number 31 references a piece which is an integral part of the buckle of the safety belt 3. This buckle has a cable 32 attached to it. This cable has an upper length 320 which extends from the buckle 31 as far as a turning point means 5, as well as a lower length 321 which extends between the turning point means 5 and the inside of the tube 40.

At this location the free end of the cable is fixed to a piston-forming piece 43 mounted so as to slide inside the tube 40 in front of the gas generator as viewed in Figure 2.

In a manner which is known per se, when an impact is detected by the various sensors with which the vehicle is equipped, information is transmitted from electronic means of a known type to the gas generator, which is triggered. The combustion of the pyrotechnical charge which it includes produces gasses within a chamber disposed on the left of the piston 43, in which the pressure increases. This increase in pressure causes a displacement of the piston 43 towards the front AV, drawing the cable 32 and the buckle 31 with it.

In this way in the fraction of a second which follows the impact the passenger of the vehicle whose seat is provided with such a device finds that his safety belt is pulled tight against his upper body because the buckle 31 has been displaced downwards, which provides him with greater safety (see arrow B in Figure 5).

In an embodiment which is not described, the second lower anchoring means of the belt undergoes the same displacement.

In accordance with the invention the safety device has additional means for displacing the anchoring element 31 towards the front AV.

These displacement means are activated only if the traction means (in this case the safety belt retractor) are activated.

In the example of Figures 2 to 4, the displacement means comprise on the one hand the traction means 4 which have just been described, and also said turning point means 5. This latter has the feature of being mounted so as to slide longitudinally relative to the seat 2.

In this case, in these figures the turning point means 5 is a sheave which is mounted so as to rotate freely on the plate 42 about a transverse, horizontal axis.

In accordance with the invention this sheave is guided in a sliding manner along a longitudinal aperture 420 formed in the plate.

Figures 2 to 4 respectively show the different steps which correspond to the displacement of the cable 32 so as to exert a movement of the safety belt buckle 31 in a downwards direction B but also towards the front AV.

However, as stated above, these displacement means are activated only under a certain condition. It is thus necessary to provide means which form a retractable stop for the sheave, able to immobilise it under certain conditions then to release it so that it returns to its opposite extreme position.

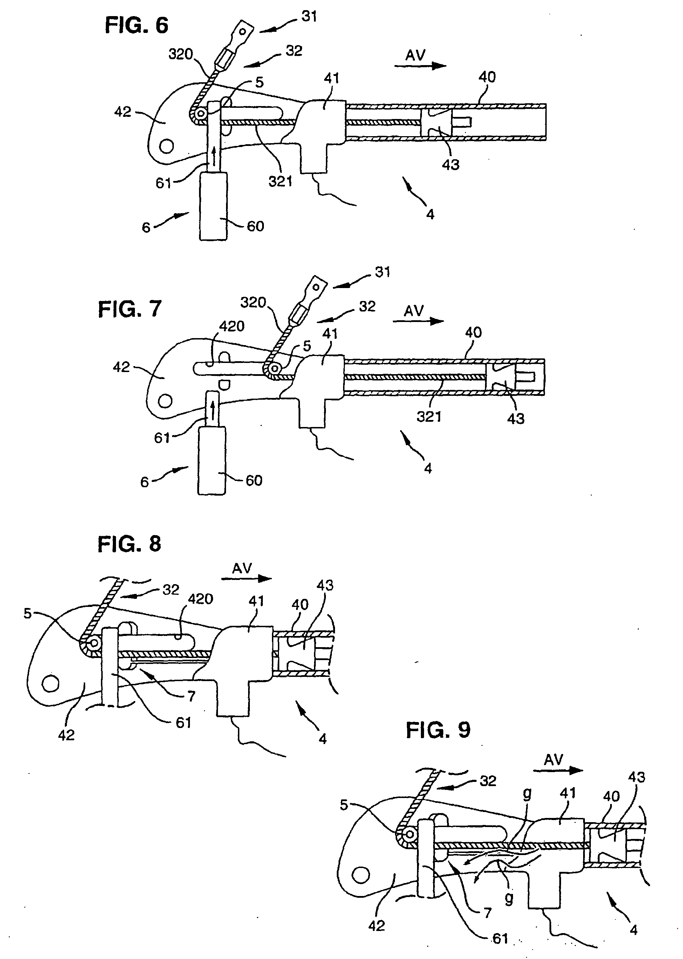

Means which can be used are shown in Figures 5 and 6.

In this case a cylinder 6 is used.

It has a body 60 and a rod 61 which are directed vertically, the rod 61, in the maximum extension position, coming into abutment against a protruding element borne by the sheave 5.

In this situation, illustrated in particular by Figures 5 and 6, when the retractor 4 has been activated a downwards displacement movement of the buckle is observed, and only this movement.

On the other hand, assuming that the impact detection system has sent command information to the cylinder 6, its rod 61 will be displaced downwards so that the sheave 5 no longer encounters any obstacles on its path along the aperture 420. It thus undergoes traction exerted by the cable 32 which causes it to occupy an opposite extreme position.

In this way there is a displacement of the safety belt buckle in a downwards direction but also towards the front (see Figures 4 and 7).

Thus the belt 31 follows, so to speak, the movement of the body of the passenger, which prevents him from sliding below the belt. He is held, as it were, at the upper part of the femur.

It will easily be understood that the gas micro-generator must produce sufficient gas to displace the piston 43 of the retractor 4 as well as, if necessary, the sheave 5. However, this means that, no matter what the manner of usage of this device the same quantity of gas is produced. Under these conditions when only the piston 43 is to be displaced too much energy is generated and the surplus must be released.

In order to do this a mechanical element 7 is placed in the immediate proximity of the rod 61 of the piston and, when it is subjected to contact and pressure from the rod 61 of the cylinder, controls a suitable discharge valve which evacuates a certain quantity of gas to the outside (arrows g in Figure 9).

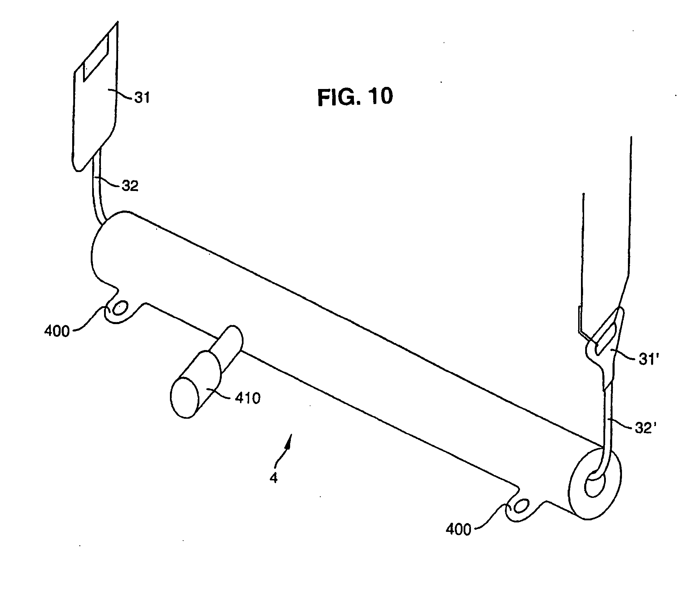

The embodiment of Figures 10 to 12 relates to a retractor 4 which has its tubular part 40 disposed transversely below the seat using fixing lugs 400. Inside this tube are housed the cables 32 and 32' to which the buckle 31 of the safety belt and a lower end 31' thereof are respectively attached.

The two open ends of the cylinder 40 are provided with turning point means 47 in the form of rings, against which the cables 32 and 32' are able to slide.

Inside the tube itself are mounted two pistons 44 and 45 separated from each other by a chamber C₁ which communicates with a gas micro-generator 410.

Each of the pistons 44 and 45 is provided with two mutually facing openings 440, 450 and 441, 451.

The cable 32 passes through the openings 441 and 451 in the two pistons and is fixed to the piston 45 by means of an end piece 320.

In a similar manner the cable 32 passes through the openings 450 and 440 in the two pistons and is fixed to the piston 44 by means of an end piece 420'.

When the gas generator is triggered, the chamber C1 fills with gas and, under the effect of the pressure, pushes the pistons away from each other.

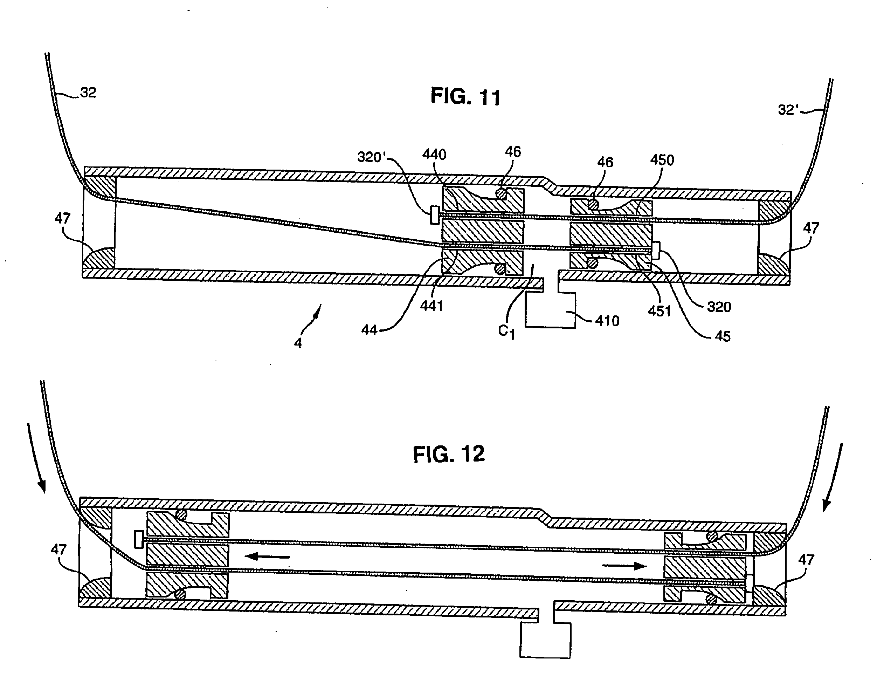

As shown in Figure 12, this translates into opposing traction forces on the cables 32 and 32', which causes a downwards displacement movement of the anchoring elements 31 and 31' of the belt.

Of course, in order to ensure the additional function of the invention, i.e. a displacement of the anchoring elements towards the front, it is necessary that the tube 40 be mounted so as to slide with respect to the seat 2 and to do so independently of the displacement of this seat with respect to the floor of the vehicle.

## Claims

1. A safety device for an automobile vehicle seat (2), which comprises:
- a safety belt (3) having at least one upper anchoring element (30) disposed in the vicinity of an edge or the upper end of the backrest (21), and at least two lower anchoring elements (31; 31') provided on the two sides of the sitting part (20) of the seat (2), one being unlockable, whereas the other is not;
- impact detection means able to detect an impact to which the vehicle is subjected;
- traction means (4) to impart a displacement towards the bottom of the seat of at least one of said lower anchoring elements (31, 31'), which are activated only on the basis of information emitted by said detection means;
- displacement means (5) for displacing said lower anchoring element (31, 31') towards the front of the seat,
- these displacement means (5) being activated only if said traction means (4) are activated,
**characterized in that** said traction means (4) consists of a safety belt retractor system which exerts traction on a cable (32, 32') fixedly attached to said anchoring element(31, 31'), via a turning point means (5), and said displacement means comprises on the one hand said traction means (4) and on the other hand the turning point means (5) which is mounted so as to slide longitudinally relative to said seat (2) so that the sliding of said means (5) causes the displacement of said anchoring means (31, 31').

2. The safety device as claimed in claim 1, wherein said lower anchoring element (31, 31') consists of the buckle of said belt (3).

3. The safety device as claimed in claim 1, wherein said lower anchoring element (31, 31') consists of a non-removable fixing piece for one end of the belt (3).

4. The safety device as claimed in any one of the preceding claims, wherein said turning point means (5) consists of a sheave which is guided so as to slide along a longitudinal aperture (420).

5. The safety device as claimed in any one of the preceding claims, comprising a retractable stop (61) able to immobilise said turning point means (5) or to release it, said stop (61) remaining in the immobilising position as long as said traction means (4) are not activated.

6. The safety device as claimed in claim 5, wherein said stop (61) consists of a cylinder rod (6), or of a rotating piston.

7. The safety device as claimed in any one of the preceding claims, wherein said safety belt retractor system comprises a tube (40) in which said cable (32, 32') is partially housed, said tube (40) extending transversely below the sitting part (20) of the seat (2) and enclosing means (410; 44, 45) for simultaneously applying traction to the two anchoring elements (31, 31') provided on the two sides of the sitting part of the seat (2).

8. The safety device as claimed in claim 7, wherein said tube is provided with means able to cause them to slide forwards independently of said seat.

## Patentansprüche

1. Eine Sicherheitsvorrichtung für einen Kraftfahrzeugsitz (2), umfassend:
- einen Sicherheitsgurt (3) mit mindestens einem in der Nähe eines Randes oder des oberen Endes der Sitzlehne (21) angeordneten oberen Befestigungselement (30), und mindestens zwei an beiden Seiten der Sitzfläche (20) des Sitzes (2) vorgesehenen unteren Befestigungselementen (31; 31'), wovon eines lösbar ist, wohingegen das andere nicht lösbar ist;
- Aufprallerkennungsmittel, welches in der Lage ist, einen Aufprall, dem das Fahrzeug ausgesetzt ist, zu erkennen;
- Zugmittel (4) zur Vermittlung einer Verschiebung in Richtung der Unterseite des Sitzes von mindestens einem der unteren Befestigungselemente (31, 31'), welche nur auf der Basis von von dem Erkennungsmittel ausgegebenen Informationen aktiviert werden;
- Verschiebemittel (5) zum Verschieben des unteren Befestigungselements (31, 31') in Richtung der Vorderseite des Sitzes,
- wobei diese Verschiebemittel (5) nur aktiviert werden, wenn die Zugmittel (4) aktiviert sind,
**dadurch gekennzeichnet, dass** das Zugmittel (4) aus einem Sicherheitsgurtaufrollersystem besteht, welches auf ein fest an dem Befestigungselement (31, 31') angebrachtes Kabel (32, 32') Zug ausübt, über ein Umlenkmittel (5), und dass das Verschiebemittel einerseits das Zugmittel (4) und andererseits das Umlenkmittel (5) aufweist, welches derart montiert ist, dass es längs zu dem Sitz (2) gleitet, so dass das Gleiten des Mittels (5) die Verschiebung des Befestigungsmittels (31, 31') bewirkt.

2. Die Sicherheitsvorrichtung nach Anspruch 1, wobei das untere Befestigungselement (31, 31') aus dem Gurtschloss des Gurtes (3) besteht.

3. Die Sicherheitsvorrichtung nach Anspruch 1, wobei das untere Befestigungselement (31, 31') aus einem nicht abnehmbaren Halteteil für ein Ende des Gurtes (3) besteht.

4. Die Sicherheitsvorrichtung nach einem der vorhergehenden Ansprüche, wobei das Umlenkmittel (5) aus einer Umlenkrolle besteht, welche derart geführt ist, dass sie entlang einer Längsöffnung (420) gleitet.

5. Die Sicherheitsvorrichtung nach einem der vorhergehenden Ansprüche, enthaltend einen zurückziehbaren Anschlag (61), welcher in der Lage ist, das Umlenkmittel (5) festzulegen oder es zu lösen, wobei der Anschlag (61) in der Festlegungsposition bleibt, solange die Zugmittel (4) nicht aktiviert sind.

6. Die Sicherheitsvorrichtung nach Anspruch 5, wobei der Anschlag (61) aus einer Zylinderstange (6) oder aus einem rotierenden Kolben besteht.

7. Die Sicherheitsvorrichtung nach einem der vorhergehenden Ansprüche, wobei das Sicherheitsgurtaufrollersystem ein Rohr (40) aufweist, in welchem das Kabel (32, 32') teilweise untergebracht ist, wobei sich das Rohr (40) quer unterhalb der Sitzfläche (20) des Sitzes (2) erstreckt und Mittel (410; 44, 45) zur gleichzeitigen Ausübung von Zug auf beide an beiden Seiten der Sitzfläche des Sitzes (2) vorgesehenen Befestigungselemente (31, 31') umfasst.

8. Die Sicherheitsvorrichtung nach Anspruch 7, wobei das Rohr mit Mitteln versehen ist, welche in der Lage sind, zu bewirken, dass diese unabhängig von dem Sitz nach vorne gleiten.

## Revendications

1. Un dispositif de sécurité pour un siège (2) de véhicule automobile, comprenant :
- une ceinture de sécurité (3) comportant au moins un élément d'ancrage supérieur (30) disposé au voisinage d'un bord ou de l'extrémité supérieure du dossier (21), et au moins deux éléments d'ancrage inférieurs (31 ; 31') prévus de part et d'autre de l'assise (20) du siège (2), l'un étant déverrouillable tandis que l'autre ne l'est pas ;
- des moyens de détection de chocs aptes à détecter un choc subi par ledit véhicule ;
- des moyens de traction (4) pour imprimer un déplacement vers le bas du siège d'au moins un desdits éléments d'ancrage inférieurs (31, 31'), qui sont activés seulement sur la base d'une information délivrée par lesdits moyens de détection ;
- des moyens de déplacement (5) permettant de déplacer ledit élément d'ancrage inférieur (31, 31') vers l'avant du siège,
- ces moyens de déplacement (5) étant activés seulement si lesdits moyens de traction (4) sont activés,
**caractérisé en ce que** ledit moyen de traction (4) consiste en un système rétracteur de ceinture de sécurité qui exerce une traction sur un câble (32, 32') attaché de manière fixe audit élément d'ancrage (31, 31'), via un moyen de renvoi d'angle (5), et ledit moyen de déplacement comprend d'une part lesdits moyens de traction (4) et d'autre part le moyen de renvoi d'angle (5) qui est monté de manière à coulisser longitudinalement relativement audit siège (2) de sorte que le coulissement dudit moyen (5) provoque le déplacement dudit moyen d'ancrage (31, 31').

2. Le dispositif de sécurité selon la revendication 1, dans lequel ledit élément d'ancrage inférieur (31, 31') consiste en la boucle de ladite ceinture (3).

3. Le dispositif de sécurité selon la revendication 1, dans lequel ledit élément d'ancrage inférieur (31, 31') consiste en une pièce de fixation inamovible d'une extrémité de la ceinture (3).

4. Le dispositif de sécurité selon l'une des revendications précédentes, dans lequel ledit moyen de renvoi d'angle (5) consiste en une poulie qui est guidée de manière à coulisser le long d'une lumière longitudinale (420).

5. Le dispositif de sécurité selon l'une des revendications précédentes, comprenant une butée escamotable (61) apte à immobiliser ledit moyen de renvoi d'angle (5) respectivement à le libérer, cette butée (61) demeurant en position d'immobilisation tant que lesdits moyens de traction (4) ne sont pas activés.

6. Le dispositif de sécurité selon la revendication 5, dans lequel ladite butée (61) consiste en une tige de vérin (6), ou en un piston rotatif.

7. Le dispositif de sécurité selon l'une des revendications précédentes, dans lequel le système rétracteur de ceinture de sécurité comprend un tube (40), dans lequel ledit câble (32, 32') est logé partiellement, ce tube (40) s'étendant transversalement sous l'assise (20) du siège (2) et renfermant des moyens (410 ; 44, 45) permettant d'appliquer simultanément une traction aux deux éléments d'ancrage (31,31') prévus de part et d'autre de l'assise du siège (2).

8. Le dispositif de sécurité selon la revendication 7, dans lequel ledit tube est pourvu de moyens aptes à les faire coulisser vers l'avant indépendamment dudit siège.
